# EUROPÄISCHE PATENTANMELDUNG

(11) **EP 1 813 496 A1**
(43) Veröffentlichungstag der Anmeldung: **01.08.2007**
(21) Anmeldenummer: 06101006.2
(22) Anmeldetag: 30.01.2006
(51) Int. Cl.: B61B 13/12, B65G 13/11, B65G 39/09

(54) **Rollenbahn für Containertransport**

(62) Teilanmeldung aus: 06120774.2
(71) Anmelder: Grilli, Silvio, 3916 Mondercange (LU)
(72) Erfinder: Grilli, Silvio, 3916 Mondercange (LU)
(74) Vertreter: Weydert, Robert

(57) **Zusammenfassung**

Die vorliegende Erfindung bezieht sich auf ein Verfahren zur Beförderung von Containern, wobei mindestens ein Container auf drehende Antriebseinheiten (12) einer Förderanlage gefahren wird, und wobei die Förderanlage auf einer langen Strecke aufgebaut wird, damit die Fernbeförderung von Containern mindestens regionalweit ermöglicht wird, sowie auf eine Förderanlage zur Beförderung von Containern umfassend einen langestreckten Rahmen (1,3); mehrere drehbaren Antriebseinheiten (12), die quer am Rahmen (1,3) und parallel zueinander am Rahmen (1,3) befestigt sind und jeweils mindestens ein Antriebsrad (10) aufweisen, auf das sich ein Container stützen kann und fahren kann, wobei sich die Förderanlage auf einer langen Strecke erstreckt, so dass sie die Fernbeförderung von Containern mindestens regionalweit ermöglicht.

## Beschreibung

### Technisches Gebiet

Die voliegende Erfindung bezieht sich auf Warentransport, insbesondere auf ein Verfahren und eine Vorrichtung zur Beförderung von Containern.

### Stand der Technik

Europa wächst und wächst und wächst. Der Warentransport dadurch auch und zwar in ungeheuren Mengen. Dadurch wird fortwährend nach neuen Transportmethoden geforscht und es bestehen auch schon sehr viele Pläne und Vorschläge zur Lösung dieses schwierigen Themas. Der jetzige Stand des Warentransports auf Europas Autobahnen sitzt in einer Sackgasse. Das Verbreitern der Autobahnen kann nicht ins Unendliche ausgeführt werden und kostet Unmengen an Geld. Damit wäre das Problem trotzdem nicht gelöst, so dass es tatsächlich angebracht ist nach anderen Methoden zu suchen. Hieran haben wir uns auch beteiligt, mit folgenden drei Überlegungen:
1) Aus dem Bedarf heraus, Umweltfreundliche Energie einsetzen zu können, anstatt der ungeheuren Mengen an Dieseltreibstoff für den Warentransport auf den Autobahnen.
2) Um die immer problematischer werdenden, schwerfälligen Fernlaster so weit wie möglich von den Autobahnen zu entfernen.
3) Damit die Waren sicher, viel schneller umweltfreundlicher und billiger ans Ziel kommen.

### Erfindung

Die der vorliegenden Erfindung zugrunde liegende Aufgabe besteht darin, eine Lösung zu den hier oben angeführten Problemen anzubieten.
Die Erfindung besteht aus einem Verfahren zur Beförderung von Containern gemäß dem Anspruch 1 sowie einer Förderanlage gemäß dem Anspruch 9.
Die Containerbahn wurde erfunden, zur meistmöglichen Entfernung der immer problematischer werdenden Fernlaster von den Autobahnen. Die Erfindung soll einen reibungslosen, sicheren und schnellen Transport der Waren, ausschliesslich mit Containern tätigen.
Das Ganze beruht auf einer neuartigen Konstruktion die sowohl über die Autobahn, als auch selbständig über neues Gelände errichtet werden kann. Führt sie über neues Gelände, dann kann die Strecke möglichst günstig geführt werden, da diese ja im Gegensatz zur Autobahn noch festzulegen ist. Die Konstruktion besteht aus einer überdachten und mit Seitenwänden versehenen Strecke (Hallenartig), in der sich die Bahn befindet, welche sowohl auf Beton- als auch auf Stahlunterlagen montiert werden kann. Führt sie über die Autobahn, dann wird sie logischerweise auf Tragestützen gebaut und zwar mit ihrem unteren Ende so hoch, dass auf der Autobahn unter ihr, trotzdem immer noch Fernlaster und Busse fahren können. Andernfalls kann sie auf die gleiche Art, auf Pfeilern je nach Bedarf und Möglichkeit errichtet werden, oder ganz einfach mit ihrer Tragfläche auf die Erdoberfläche.
Die Containerbahn ist eine neuartige Transportform für Container. Sie besteht aus einer mit Rädern (Rollen) bestückten Konstruktion, auf denen die Container fortbewegt werden, anstatt mit Fernlastern. Sie kann auf ihrer ganzen Länge in einer Art Halle untergebracht werden, welche vollständig mit Solarzellen belegt ist, sowohl das Dach als auch die Seitenwänden und kann so ihren Strombedarf selbst produzieren. Gleichzeitig wäre sie somit total vor sämtlichen äusseren Einflüsse abgeschirmt, wie z.B. Witterung und Unbefugten. Zur Stromversorgung der Containerkühlaggregate werden diese eventuell mit hochklappbaren Stromabnehmern (oder ähnliches) ausgestattet indem sie den Strom z.B. aus einer Stromleitung beziehen. Diese kann unter dem Dach auf einer Höhe angebracht werden die es mindestens erlaubt, "High-Cube"-Container (mit einer Höhe von 2,90m) darunter transportieren zu können. Diese Leitung kann aber auch anderswo, z.B. seitwärts angebracht werden. Wird mit den vielen Solarzellen Strom in Überfluss erzeugt, dann kann man diesen ins öffentliche Netz einspeisen, oder gegebenenfalls bei Bedarf wieder dem Netz entnehmen. Der Transport kann ununterbrochen vom Start- bis zum Zielort verlaufen, Tag und Nacht, ohne Rücksicht auf Feiertage und Witterung. Am Zielort angelangt, werden die Container z.B. über die Strasse zum Kunden gebracht und umgekehrt vom Kunden zur Containerbahn. Durch das Überdecken kann man sämtliches Niederschlagswasser auffangen und da es nicht verschmutzt und Streusalzfrei ist, in den öffentlichen Wasserhaushalt einspeisen. Der Warentransport mit Fernlastern sollte anfangs auf langen Strecken (und später nach Bedarf Etappenweise auch auf kürzeren Strecken) in die Containerbahn verlegt werden und von den Autobahnen, so weit wie möglich verschwinden.
Anstatt die Containerbahn über die Autobahn zu konstruieren, könnte man sie auch eigenständig über Land führen. Dies hätte dann den Verbrauch von zusätzlichem Land als Nachteil. Dadurch dass sie beliebig über ungenutztes Brachland geführt werden kann, würden aber die Vorteile dies grosszügig übertreffen, denn sie könnte im Gegenteil zur Autobahn viel gerader geführt und dadurch kürzer werden. Da sie weder angemessene Steigungen noch Gefälle oder Unwetter zu fürchten braucht, kann sie fast beliebig Berge und Bergketten empor und hinunterfahren, oder an den Hängen entlang umfahren und braucht so deutlich weniger Tunnels oder hohe Brücken. Das Bauverfahren wäre in diesem Fall auch einfacher.

### Zeichnungen

- Bild 1 zeigt eine bevorzugte Anordnung der Containerbahn.
- Bild 2 zeigt Konstruktionsdetails der Containerbahn.
- Bild 2A ist eine Draufsicht eines Teils der Containerbahn.
- Bild 3 stellt zwei Antriebseinheiten dar und zeigt, wie sie austauschbar sind.
- Bild 4 zeigt, wie die Antriebseinheiten an dem Rahmen der Containerbahn angebracht sind.
- Bild 5 zeigt das Funktionsprinzip der Containerbahn.
- Bild 6 zeigt weitere Details der Containerbahn.
- Bild 7 zeigt eine Platform, auf der ein Container zu transportieren ist.

### Ausführungsbeispiele der Erfindung

Das prinzip der "Containerbahn"
Die Containerbahn besteht aus zwei nebeneinanderlaufenden Fahrspuren welche in die eine Richtung laufen und zwei Weitere welche parallel zu diesen in entgegengesetzte Richtung führen, genau wie die Autobahn. Diese Doppelstränge dienen ausschliesslich zur Beförderung von Containern. Da sich auf jedem Doppelstrang die linke Spur (in Fahrtrichtung) am äusseren Rand der Containerbahn befindet, würde diese sich am besten als Lauf-, Auf- und Ausfahrtspur eignen. Die rechte Spur hingegen, dient dann in diesem Fall nur als Überhol- und Ausweichspur bei Bedarf, z.B. bei eventuellen grösseren Reparaturen. Über die Mittelstreifen und die Ausweichstreifen der Autobahn werden diese Flächen entlang der Containerbahn als Fahrwege der Unterhaltsmannschaften genutzt. Neben den äusseren Fahrwege werden Werkstätten errichtet und damit die Ersatzteile nicht zu weit transportiert werden müssen, kommen in angemessenen Abständen die Ersatzteillager.

Wie funktioniert die "Containerbahn" ?
Mit der Containerbahn stellen wir den Transport der Container praktisch auf den Kopf.
Das heisst: bislang wurden die Container über den Aufleger auf die Räder des Lastwagens durch dessen eigenen Motor befördert, indem die Lkw-Räder über die Strasse liefen. Die Container kommen nämlich anfangs auf Plattformen, an denen sie durch Drehverriegelungen (Twist-locks) befestigt sind und laufen über die feststehenden, sich drehenden Räder (Rollen) und somit haben wir, wie schon erwähnt, das Prinzip auf den Kopf gestellt. Danach sollten beim Bau von neuen Containern und im Laufe der Zeit auch die schon existierenden noch brauchbaren, nach und nach mit Laufflächen und Führungsflanken versehen werden und die Plattformen können dann nach und nach wieder aus dem Verkehr geholt werden. Für die Spurenhaltung der Container sorgen z.B. seitlich angebrachte Führungsrollen. Das viele überflüssige Mehrgewicht des Lastwagens musste stets und überall mitgeschleppt werden, was eine enorme Verschwendung an Material (Verschleiss) und vor allem von Kraftstoff mit sich brachte. Die Containerbahn dagegen ist sozusagen ein Gemeinschaftstransportmittel und trotzdem läuft jeder einzelne Container computergesteuert selbständig sein Ziel unaufhaltsam an. Mit ihr wird nur der Container transportiert und zwar ohne Treibstoff, sondern mit dem selbstproduzierten, oder (bei Bedarf) vom Netz entnommenen Strom. Der Verschleiss fällt natürlich auf die mechanischen, elektrischen und elektronischen Einrichtungen zurück, aber halten sich hier in Grenzen, unter anderem weil alle Austauchelemente standardisiert sind und das Ganze nicht den Witterungseinflüssen ausgesetzt ist. Auch fallen die Ausfallzeiten der Fernlaster während der Reparatur- und Wartungszeiten aus. Durch die Standardisierung gestaltet sich der Unterhalt viel einfacher als bei den Fernlastern, weil immer nur die gleichen Teile ausgetauscht werden, die schon überholt (gewartet) auf Lager auf ihren Einsatz (Austausch) mit wenigen Handgriffen warten. Unser Hauptanliegen besteht darin, dass wir einen möglichst unbehinderten kontinuirlichen Materialfluss erreichen wollen. Dies ist eine der wichtigsten Aufgaben der Containerbahn und zwar mit einem Höchstmass an Sicherheit. Deshalb müssen die Fahrspuren (Transportstränge) absolut menschenleer sein und nur bei Unfällen oder Reparaturarbeiten von den jeweiligen Mannschaften betreten werden, während der Transport auf diesem Streckenabschnitt auf der anderen Spur weiterläuft. Jedes Antriebsrad hat z.B. seinen eigenen Elektromotor und bildet so eine komplette Antriebseinheit. Diese Antriebseinheiten sind so angeordnet, dass wenn ein oder mehrere Elektromotoren oder Antriebsräder ausfallen, sich immer noch genügend intakte Antriebseinheiten unter dem kleinsten Container befinden, um ihn weiterzubefördern. Die defekte Antriebseinheit oder -einheiten werden dann kurzerhand entfernt und durch andere schon bereitstehende und in der Werkstatt überholte ersetzt. Diese und alle anderen anfallenden Wartungsarbeiten können problemlos ausgeführt werden, währenddem der Containertransport unbehelligt über die zweite Spur weiterläuft.

Der Antrieb der "Containerbahn".
Die Antriebseinheiten der Containerbahn sind (wie im vorigen Artikel schon erwähnt) so angebracht, dass bei Ausfall von einer oder mehreren Antriebseinheiten gleichzeitig, sich unter dem kleinsten Container immer noch genügend funktionsfähige Antriebseinheiten befinden, um den Weitertransport zu gewährleisten. Die Antriebseinheiten werden nur bei Bedarf eingeschaltet. Ist kein Container in Anfahrt, dann stehen sie still. Nähert sich ein Container einer Antriebseinheit bis auf eine bestimmte Nähe, dann schaltet diese sich ein um schon in Fahrt zu sein, wenn der Container sie erreicht. Hat er sie mit seinem hinteren Ende überfahren, dann schaltet sie wieder ab und wartet auf den nächsten Einschaltbefehl. Dann die nächste Antriebseinheit und so weiter. Kommen die Container dicht genug hintereinander herangefahren, dann laufen die Antriebseinheiten ununterbrochen weiter. Da der ganze Versandprozess computergesteuert ist, werden die Weichen automatisch gestellt. Der Container ist intern jederzeit identifizierbar, nach aussen in höchstem Mass geschützt und kann während seiner Fahrt fortwährend verfolgt werden.

Die konstruktion der "Containerbahn".
Führt die Containerbahn über die Autobahn, dann wird letztere dadurch nicht beeinträchtigt und sie bleibt voll funktionsfähig bestehen. Später wird sich feststellen lassen, ob man sie stellenweise zu Kosteneinsparungen zurückbauen kann, anstatt sie gemäss den heutigen immer wiederkehrenden Forderungen, wegen der kontinuierlichen Zunahme der Fernlaster sehr kostspielig zu verbreitern. Die Containerbahn ist dazu bestimmt soviel Fracht wie möglich von der Autobahn zu nehmen und das kann sie durchaus, denn sie hat ein enormes Aufnahmepotential, da die Container bei Bedarf, ähnlich wie die Wagen eines Zuges hintereinander laufen können ohne miteinander verbunden zu sein. Mittelstreifen und Seitenränder der Autobahn können zum einpflanzen der Stützpfeiler für die Containerbahn dienen, so dass keine weitere Oberfläche benötigt wird, abgesehen von Stellen an denen das Überfahren der Autobahn nicht möglich ist, wie z.B. Tunnels oder hohe Brücken. Bei Tunnels kann sie das Hindernis um- oder überfahren und bei hohe Brücken kann sie ins Tal hinunter und auf der anderen Seite wieder hoch fahren, um danach wieder über die Autobahn zu gelangen. Die Pfeiler und die Tragkonstruktion können nach Möglichkeit und Bedarf entweder aus Stahl (Stahlträger, Stahlplatten u.s.w.) oder aus Stahlbeton, oder anderen geeigneten Materialien errichtet werden. Die Pfeiler, die zu beiden Seiten und dem Mittelstreifen der Autobahn aus dem Boden herauswachsen, laufen weiter in die Höhe, bis sie sich am oberen Ende z.B. durch eine gewisse Schrägstellung miteinander verbinden. Dadurch bilden sie eine solide Einheit und indem diese Einheiten miteinander verbunden werden, dienen sie gleichzeitig als Dachauflage und Wandverkleidung. Das Dach und die gesamten Seitenflächen werden (soweit das möglich und erwünscht ist) ganz z.B. mit Hallenblechen verkleidet, an denen dann die Solarzellen angebracht werden können. An jedem mit Containern zu beliefernden Schwerpunkt werden Containerausfahrten errichtet, mit anschliessendem Auffang- bzw. Ab- und Aufladeplatz. Von hier aus werden die Container zum und vom Kunden gebracht. An jeder Abfahrtsrampe steht (so wie auf den Schiffcontainerhäfen) eine Röntgenanlage und jeder Container muss sie zur Vorsichtsmassnahme und zur Warenkontrolle vor seiner Reise durchfahren.

Bild 1
Die Containerbahn besteht genau wie die Autobahn aus den zwei Doppelsträngen 1. Sie führen in entgegengesetzten Richtungen. Auf jedem Doppelstrang ist je eine Fahrspur 2 und eine Überholspur 3. An der Stelle des Mittelstreifens und der beiden Ausweichspuren der Autobahn, befinden sich auf der Containerbahn Wartungswege 4. Während die äusseren Wartungswege 4 zur Bedienung der äusseren Fahrspuren 2 dienen, ist der Mittlere zur Betreuung der beiden Überholspuren 3 bestimmt. Auf der Überdachung sowie an den Seitenwänden sind Solarzellen 5 angebracht, woraus die Containerbahn ihren Strom bezieht. Das Niederschlagswasser wird z B in unterirdischen Auffangbecken 6 gesammelt, welche sich aussen neben der Bahn in regelmässigen Abständen befinden und von hier aus weitergeleitet wird, oder direkt dem öffentlichen Wasserhaushalt zugeführt wird.

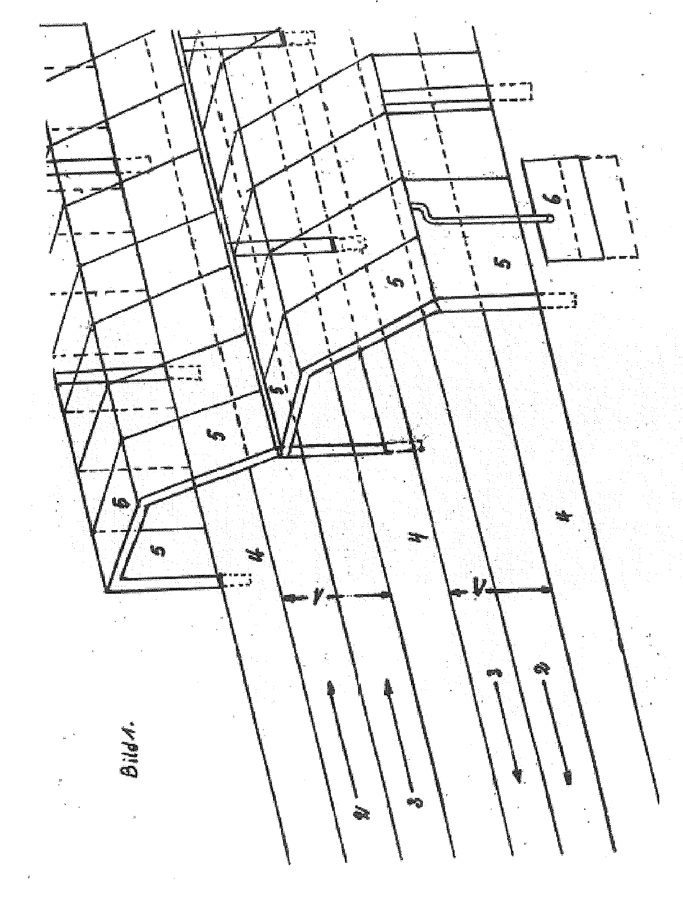

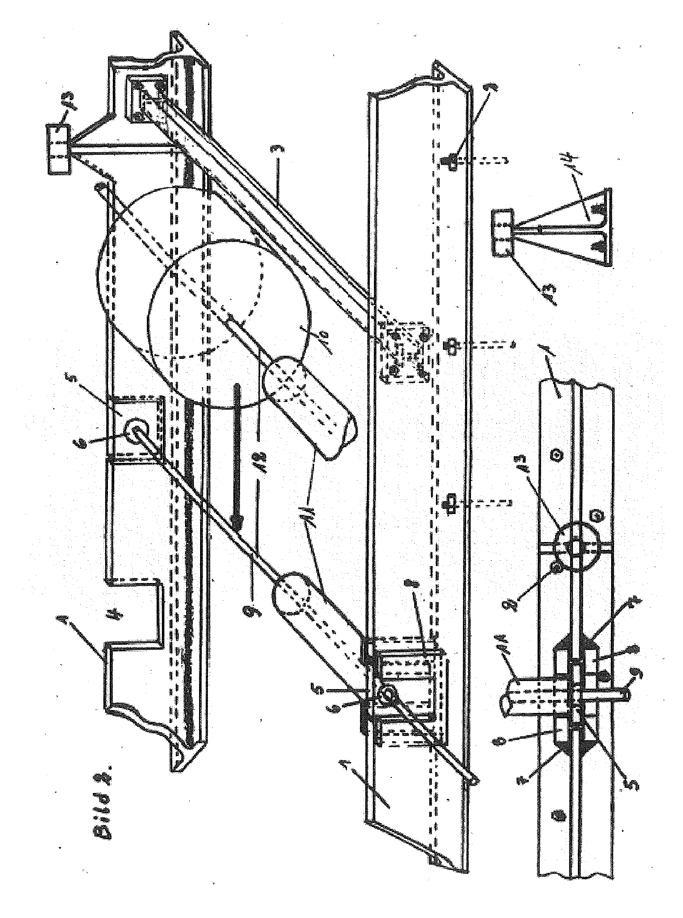

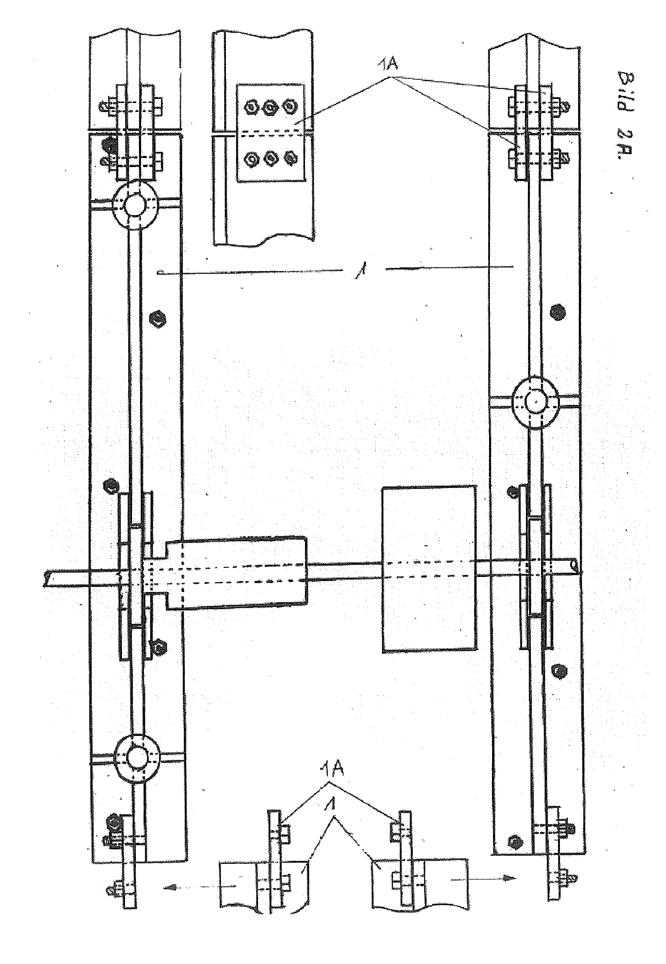

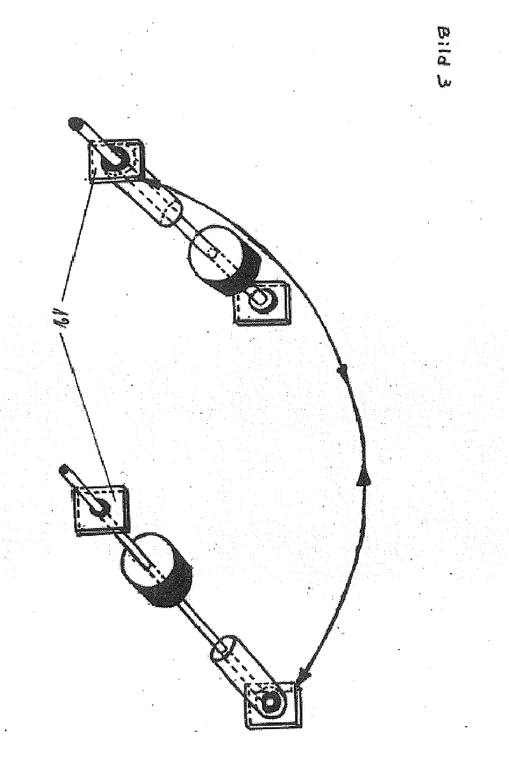

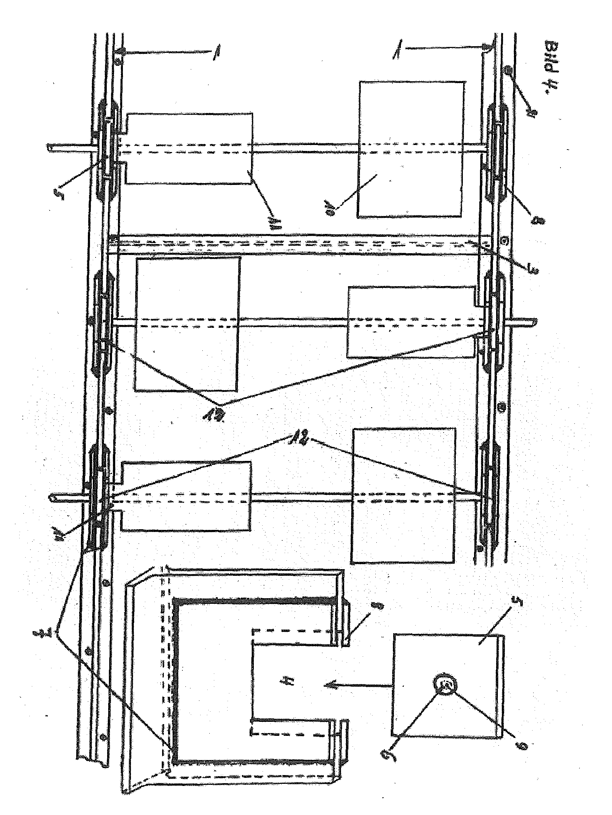

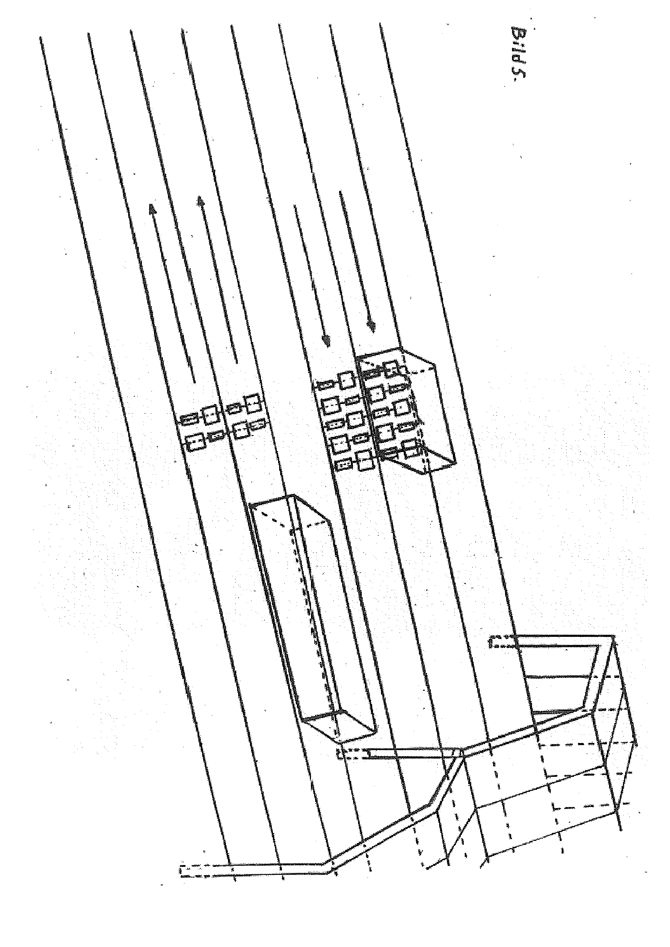

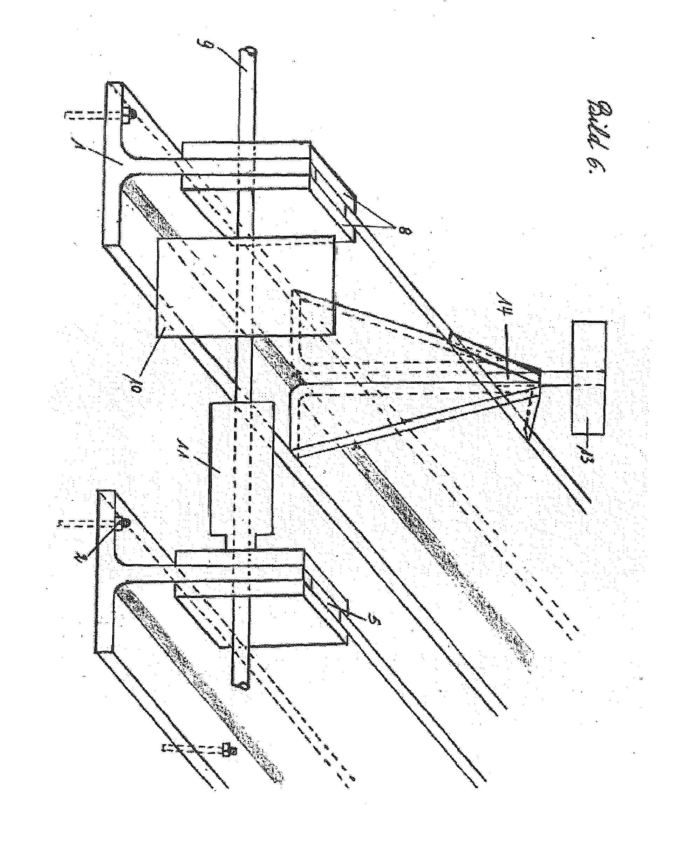

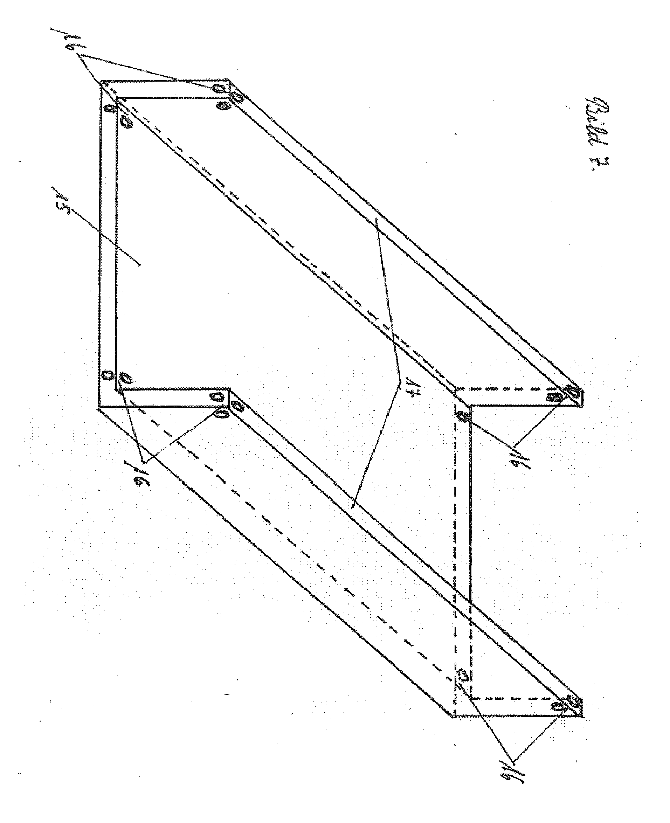

Bilder 2-7
Die Bahn selbst besteht aus zwei T-förmigen (oder ähnlichen) miteinander verbundenen parallellaufenden Stahlträgersträngen 1, bestehend aus einzelnen durch Verbindungsplatten 1A (Bild 2A) aneinander verschraubten Segmenten, welche auf dem Tragkörper mit Verankerungsschrauben 2 befestigt sind und durch auswechselbare Abstandhalter 3 (nicht starr, zum Austausch beider) miteinander verbunden sind. In den Stahlträgern befinden sich von oben nach unten, Einschnitte 4 für die Einschiebeplatten 5 mit Lager 6, welche von den auf den Stahlträgern verschweissten (oder anders befestigten) Halterungsplatten 8 (siehe Schweissnaht 7) in Position gehalten werden. Durch die Lager hindurch läuft eine Achse 9, auf der ein Antriebsrad 10 und ein Elektromotor 11 montiert sind. Der Elektromotor 11 ist an der diesseitigen Einschiebeplatte 5 befestigt. So bildet das Ganze eine kompakte Antriebseinheit 12, welche sowohl rechtsseitig als auch linksseitig in die Einschnitte eingeschoben werden kann (siehe hierzu auch Bild 3). Auf den Stahlträgern sind Führungsrollen 13 zur Spurenführung der Container angebracht, welche auf den Halterungen 14 montiert sind. Auf die von den Elektromotoren 11 angetriebenen Antriebsräder 10 kommen die Plattformen 15 (Bild 7), auf denen sich die Container befinden, welche mit Drehverriegelungen (Twistlocks) an die Halterungen (corner-castings)16 (Bild 7) befestigt sind und von diesen Antriebsrädern fortbewegt werden. An den Seitenwänden 17 der Plattformen 15 laufen die Führungsrollen 14 zur Spurenführung. Die Plattformen haben eine Länge die den Containern der Norm TEU (20 Fußcontainer) entspricht und sind mit 8 corner-castings 16 versehen, damit man die Plattformen selbst zu zwei aneinander befestigen kann um so die FEU (40 Fußcontainer) transportieren zu können und die Containern daran zu befestigen. Die Antriebseinheiten 12 sind in solchen Abständen voneinander angebracht, dass sich bei Ausfall von einer oder auch gleichzeitig mehrerer Antriebseinheiten, unter dem kleinsten Container immer noch so viele Antriebseinheiten befinden, dass der Weitertransport garantiert bleibt (siehe Bild 4 und Bild 5).

Erklärung der Bezugszeichen auf den Bildern.

### Bild 1:

- 1.: Doppelstrang
- 2.: Fahrspur
- 3.: Überholspur
- 4.: Wartungswege
- 5.: Solarzellen
- 6.: Auffangbecken

### Bilder 2-7:

- 1.: T-förmige Stahlträger
- 1A.: Verbindugsplatten
- 2.: Verankerungsschrauben
- 3.: Abstandshalter
- 4.: Einschnitte
- 5.: Einschiebeplatten mit Lager
- 6.: Lager
- 7.: Schweissnaht
- 8.: Aufgeschweisste Halterungsplatten
- 9.: Achse
- 10.: Antriebsrad
- 11.: Elektromotor an der inneren Seite der Einschiebeplatte befestigt
- 12.: Beidseitig austauschbare Antriebseinheit
- 13.: Führungsrollen
- 14.: Führungsrollenhalterungen
- 15.: Plattform
- 16.: Halterungen (corner-castings)
- 17.: Seitenwände als Laufflächen für die Führungsrollen

## Patentansprüche

1. Verfahren zur Beförderung von Containern, wobei
mindestens ein Container auf drehende Antriebseinheiten (12) einer Förderanlage gefahren wird,
**dadurch gekennzeichnet, dass**
die Förderanlage auf einer langen Strecke aufgebaut wird, damit die Fernbeförderung von Containern mindestens regionalweit ermöglicht wird.

2. Verfahren gemäß dem Anspruch 1, wobei
die Spur der Container durch an der Förderanlage befestigte Führungsrollen (13) geführt wird.

3. Verfahren gemäß einem der vorigen Ansprüche, wobei
die Förderanlage überdeckt ist und gegebenenfalls mit Seitenwänden hallenartig versehen ist.

4. Verfahren gemäß einem der vorigen Ansprüche, wobei
mindestens ein Container über Stromabnehmer, die gegen am Dach oder seitwärts angebrachte elektrische Leitungen gleiten, mit Strom versorgt wird.

5. Verfahren gemäß einem der vorigen Ansprüche, wobei
die Antriebseinheiten (12) und gegebenenfalls die ganze Anlage durch Solarzellen mit Strom versorgt werden.

6. Verfahren gemäß einem der vorigen Ansprüche, wobei
die Fernbeförderung auf zwei nebeneinanderlaufenden Spuren, vorzugsweise in beiden Richtungen erfolgt.

7. Verfahren gemäß einem der vorigen Ansprüche, wobei
mindestens eine der Antriebseinheiten (12) durch einen herannahenden Container eingeschaltet wird und vorzugsweise durch einen sich entfernenden Container ausgeschaltet wird.

8. Verfahren gemäß einem der vorigen Ansprüche, wobei
der mindestens eine Container auf eine Platform (15) zur Beförderung auf die Förderanlage angebracht wird.

9. Förderanlage zur Beförderung von Containern umfassend
einen langestreckten Rahmen (1,3);
mehrere drehbaren Antriebseinheiten (12), die quer am Rahmen (1,3) und parallel zueinander am Rahmen (1,3) befestigt sind und jeweils mindestens ein Antriebsrad (10) aufweisen, auf das sich ein Container stützen kann und fahren kann,
**dadurch gekennzeichnet, dass**
sich die Förderanlage auf einer langen Strecke erstreckt, so dass sie die Fernbeförderung von Containern mindestens regionalweit ermöglicht.

10. Förderanlage gemäß dem Anspruch 9, wobei
der Rahmen (1,3) einzelne vorzugsweise durch Verbindungsplatten (1A) aneinander befestigte vorzugsweise T-förmige Trägerelemente (1) und Abstandhalter (3) aufweist.

11. Förderanlage gemäß einem der Ansprüche 9-10, wobei der Rahmen Führungsrollen (13) zur Spurenführung der Container aufweist.

12. Förderanlage gemäß einem der Ansprüche 9-11, wobei
mindestens eine der Antriebseinheiten (12) mindestens zwei Lager aufweist, die als Einschiebeplatten (5) ausgeführt sind, und durch die eine Achse (9) hindurch läuft, und die Einschiebeplatten (5) in Einschnitte (4) des Rahmens (1,3) eingeschoben sind.

13. Förderanlage gemäß einem der Ansprüche 9-12, wobei
mindestens eine der Antriebseinheiten (12) eine Achse (9) aufweist, auf der ein Antriebsrad (10) sowie vorzugsweise ein elektrischer Motor (11) angeordnet ist, der vorzugsweise an einer der Einschiebeplatten (5) angeflanscht ist.

14. Förderanlage gemäß dem Anspruch 13, wobei
die Antriebseinheiten (12) derart ausgeführt sind, dass sie in die eine oder die um 180° umgedrehte Position eingebaut werden können.

15. Förderanlage gemäß einem der Ansprüche 9-14, wobei
die Förderanlage überdeckt ist und gegebenenfalls mit Seitenwänden hallenartig versehen ist.

16. Förderanlage gemäß einem der Ansprüche 9-15, wobei
die Förderanlage Solarzellen, die vorzugsweise auf dem Dach und/oder an den Seitenwänden der Förderanlage angeordnet sind, zur Stromversorgung der Antriebseinheiten (12) aufweist.

17. Förderanlage gemäß einem der Ansprüche 9-16, wobei
die Förderanlage aus zwei nebeneinanderlaufenden Fahrspuren (Bild 1: 2,3) besteht, wobei vorzugsweise die Eine in eine Richtung läuft und die Andere in die entgegengesetzte Richtung läuft.

18. Förderanlage gemäß einem der Ansprüche 9-16, wobei
die Förderanlage aus zwei nebeneinanderlaufenden Fahrspuren (Bild 1: 2,3), die in eine Richtung laufen, und zwei weiteren nebeneinanderlaufenden Fahrspuren (Bild 1: 2,3), die parallel zu diesen in die entgegengesetzte Richtung laufen, besteht.

19. Förderanlage gemäß Anspruch 17 oder 18, wobei
ein Wartungsweg (Bild 1: 4) in der Mitte zwischen den zwei bzw. vier nebeneinanderlaufenden Fahrspuren (Bild 1: 2,3) und/oder an der äusseren Seite einer jeweiligen äusseren Fahrspur (Bild 1: 2) vorgesehen ist.

20. Förderanlage gemäß einem der Ansprüche 9-19, wobei
mindestens eine der Antriebseinheiten (12) derart gesteuert ist, dass die Antriebseinheit eingeschaltet wird, wenn ein Container zur Antriebseinheit heran naht, und vorzugsweise ausgeschaltet wird, wenn sich ein Container von der Antriebseinheit entfernt.
